# EUROPÄISCHE PATENTSCHRIFT

(11) **EP 0 960 304 B1**
(45) Veröffentlichungstag und Bekanntmachung des Hinweises auf die Patenterteilung: **04.02.2004**
(21) Anmeldenummer: 98965679.8
(22) Anmeldetag: 19.11.1998
(51) Int. Cl.: F16M 1/00

(54) **STATIV MIT EINER IN EINEM ARMROHR ANGEORDNETEN DRUCKFEDER**
SUPPORT WITH A PRESSURE SPRING ARRANGED IN A TUBULAR ARM
SUPPORT MUNI D'UN RESSORT DE PRESSION MONTE DANS UN BRAS TUBULAIRE

(30) Priorität: 19.11.1997 DE 19751048
(43) Veröffentlichungstag der Anmeldung: 01.12.1999
(73) Patentinhaber: Wella Aktiengesellschaft, 64274 Darmstadt (DE)
(72) Erfinder: SCHMITT, Bernd, D-36088 Hünfeld-Michelsrombach (DE)
(86) Internationale Anmeldenummer: PCT/EP1998/007421
(87) Internationale Veröffentlichungsnummer: WO 1999/026014

(56) Entgegenhaltungen:
- DE-B- 1 198 302
- US-A- 3 584 793
- US-A- 4 082 244
- US-A- 4 107 769
- US-A- 5 004 368

## Beschreibung

Die Erfindung betrifft ein Stativ nach der Gattung des Oberbegriffs des Anspruchs 1, wie aus der US-A-5 004 368 bekannt.

Bei bekannten Stativen ist durch den gegebenen konstruktiven Aufbau eine Montage der Druckfeder für den Masseausgleich einer Traglast sehr aufwendig und damit entsprechend kostenintensiv.

Der Erfindung liegt die Aufgabe zugrunde, ein gattungsgleiches Stativ zu schaffen, das die oben genannten Nachteile nicht aufweist.

Diese Aufgabe wird nach den kennzeichnenden Merkmalen des Anspruchs 1 gelöst. Vorteilhafte Weiterbildungen der Erfindung gehen aus den Unteransprüchen hervor.

Die Erfindung wird anhand eines Ausführungsbeispiels näher beschrieben.

Es zeigt:
- Figur 1: eine Baueinheit Druckfeder/Spindel;
- Figur 2: eine Baueinheit nach der Figur 1, jedoch axial um 90 Grad gedreht;
- Figur 3-7: verschiedene Darstellungen eines Armrohrs mit Einbuchtungen und ein Zusammenspiel dazu mit einem ersten Federanschlag;
- Figur 8: in einer Seitenansicht das Armrohr in einem Schnitt B-B nach der Figur 9;
- Figur 9: das Armrohr um 90 Grad verdreht in einem Schnitt A-A nach der Figur 8;
- Figur 10: das Armrohr mit einem über ein Zapfengelenk verbundenen Stativrohr;
- Figur 11: in einer Ausschnittvergrößerung den Schnitt C-C nach der Figur 8;
- Figur 12: ein vollständig dargestelltes Ausführungsbeispiel eines Stativs mit einer Traglast; und
- Figur 13 u. 14: das Armrohr wie nach den Figuren 8 und 9, aber mit einem nach unten angeordneten Zapfengelenk.

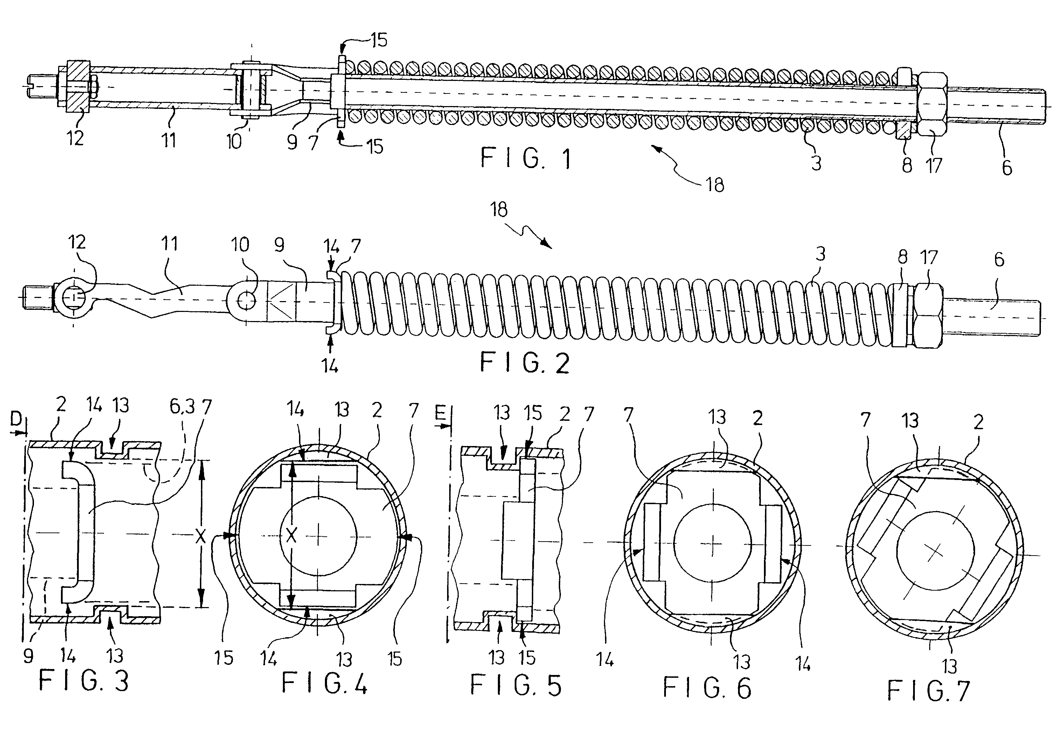

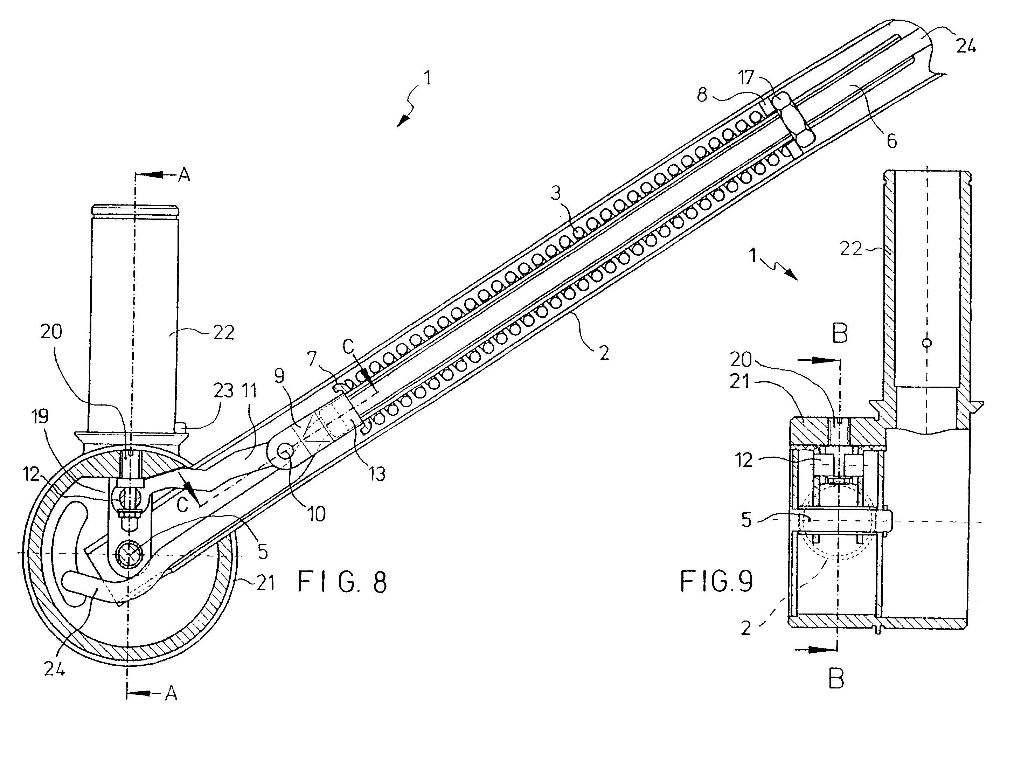

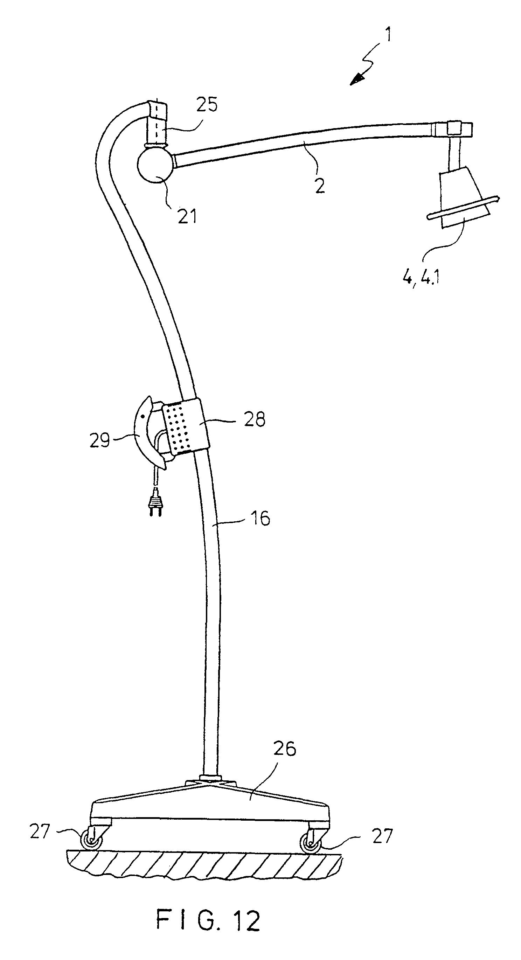

In den Figuren ist ein Stativ 1 (Figur 12) mit einer in einem Armrohr 2 (Figur 3, 8) angeordneten Druckfeder 3 (Figur 1, 8) zum Halten einer Traglast 4 (Figur 12) in einer manuell vorgegebenen Höhenposition mittels eines Armgelenks 5 (Figur 8), dargestellt. Die Druckfeder 3 ist von einer Spindel 6 (Figur 1) mit einer vorgegebenen Vorspannung einerseits mittels eines ersten Federanschlags 7 (Figur 1) und andererseits mittels eines zweiten Federanschlags 8 (Figur 1) kraftschlüssig aufgenommen. Die Spindel 6 weist im Bereich des ersten Federanschlags 7 eine axiale Verlängerung 9 (Figur 1) auf, die über ein erstes Gelenk 10 (Figur 1) mit einem Hebel 11 (Figur 1) verbunden ist, der endseitig mit einem zweiten Gelenk 12 (Figur 1) verbunden ist. Das Armrohr 2 ist mit dem Armgelenk 5 verbunden. Der erste Federanschlag 7 liegt kraftschlüssig auf der axialen Verlängerung 9 auf. Das Armrohr 2 ist mit zwei gegenüberliegenden Einbuchtungen 13 (Figur 3) versehen, die zueinander einen Abstand X aufweisen, wobei der erste Federanschlag 7 scheibenartig vorgesehen ist und daß zwei gegenüberliegende erste Seiten 14 (Figur 3) einen kleineren Abstand als X aufweisen und daß zwei um 90 Grad verdrehte zweite Seiten 15 (Figur 4) einen größeren Abstand als X aufweisen, wobei die zweite Seiten 15 mit den Einbuchtungen 13 nach Art einer Bajonettverriegelung miteinander kommunizieren.

In der Figur 1 ist die Spindel 6 beispielshalber als eine Gewindespindel mit einer Gewindemutter 17 (Federkrafteinstellung für Gewichtsausgleich) vorgesehen, die den zweiten Federanschlag 8 fixiert. Im Bereich des ersten Federanschlags 7 weist die Spindel 6 eine axiale Verlängerung 9 in Form einer Gabel auf, die über ein erstes Gelenk 10 mit einem Hebel 11 verbunden ist, der endseitig mit einem zweiten Gelenk 12 verbunden ist und als eine Baueinheit 18 ausgebildet ist, woraus sich ein zusätzlicher Montagevorteil ergibt.

Figur 2 zeigt eine axial um 90 Grad gedrehte Ansicht nach der Figur 1.

Aus den Figuren 3 bis 7 geht das Zusammenspiel der Einbuchtungen 13 des Armrohrs 2 mit dem ersten Federanschlag 7 näher hervor. Zum besseren Verständnis wurden die axiale Verlängerung 9 und die Spindel 6 mit der Druckfeder 3 ausgelassen. Aus der Figur 3 geht anschaulich hervor, daß der Abstand der zwei gegenüberliegenden ersten Seiten 14 des ersten Federnanschlags 7 derart kleiner ist als der Abstand X der beiden Einbuchtungen 13, daß diese zusammen als eine Baueinheit 18 ungehindert über diese Einbuchtungen 13 hinaus weiter in das Armrohr 2 geschoben werden können.

Eine Ansicht D nach der Figur 3 ist in der Figur 4 dargestellt.

Nachdem der erste Federanschlag 7 die Einbuchtungen 13 deutlich passiert hat, wird der Federanschlag 7 durch Drehen des Hebels 11 um 90 Grad verdreht und auf die Einbuchtungen 13 zurückgezogen. Diese Position zeigt die Figur 5, woraus die Verriegelung nach Art einer Bajonettverriegelung gut hervorgeht.

Eine Ansicht E nach der Figur 5 geht aus der Figur 6 hervor.

Aus der Figur 7 geht die Funktion der abgekanteten ersten Seiten 14 des ersten Federanschlags 7 näher hervor. Dadurch, daß die ersten Seiten 14 abgekantet sind, verkanten diese bei axialer Drehung mit den Einbuchtungen 13 derart, daß die zweiten Seiten 15 nicht ungewollt aus der Bajonettverriegelungsposition gedreht werden können, sondern erst gezielt durch axiales Eindrücken der Baueinheit 18 und durch eine axiale 90 Grad Drehung und eine Entlastung und Herausziehen aus dem Armrohr 2.

Aus den Figuren 8 und 9 geht der Zusammenbau und die Funktion der Baueinheit 18 mit dem Stativ 1 näher hervor, wobei der Schnitt A-A nach der Figur 8 in der Figur 9 und der Schnitt B-B nach der Figur 9 in der Figur 8 dargestellt ist. Nachdem die Baueinheit 18 in das Armrohr 2 entsprechend eingeführt ist, wird der Anfang des Armrohrs 2 mit dem Armgelenk 5 verbunden. Das Gelenk 12 des Hebels 11 wird mit einer Gelenkaufnahme 19 verbunden, wobei das Gelenk 12 mittels einer von außen zugänglichen Stellschraube 20 verstellt werden kann für eine Feineinstellung der Federspannung für eine Lastanpassung. Oberhalb eines Gelenkgehäuses 21 ist ein nach oben gerichtetes hohles Zapfenverbindungselement 22 angeordnet und mit einem Drehanschlag 23 versehen. Durch das hohle Zapfenverbindungselement 22 und der hohlen Spindel 6 ist ein Stromversorgungskabel 24 für z. B. eine Leuchte 4.1 angeordnet. Durch die Verbindung der Baueinheit 18 mit dem Armrohr 2 nach Art einer Bajonettverbindung ergeben sich folgende Vorteile:
- freie Gestaltungsmöglichkeiten des Armrohrs 2 hinter der freien Spindel 6.
- Einfache Montage der Druckfeder 3 mit der Spindel 6.
- Keine "Blindmontage" an schwer zugänglichen Stellen.

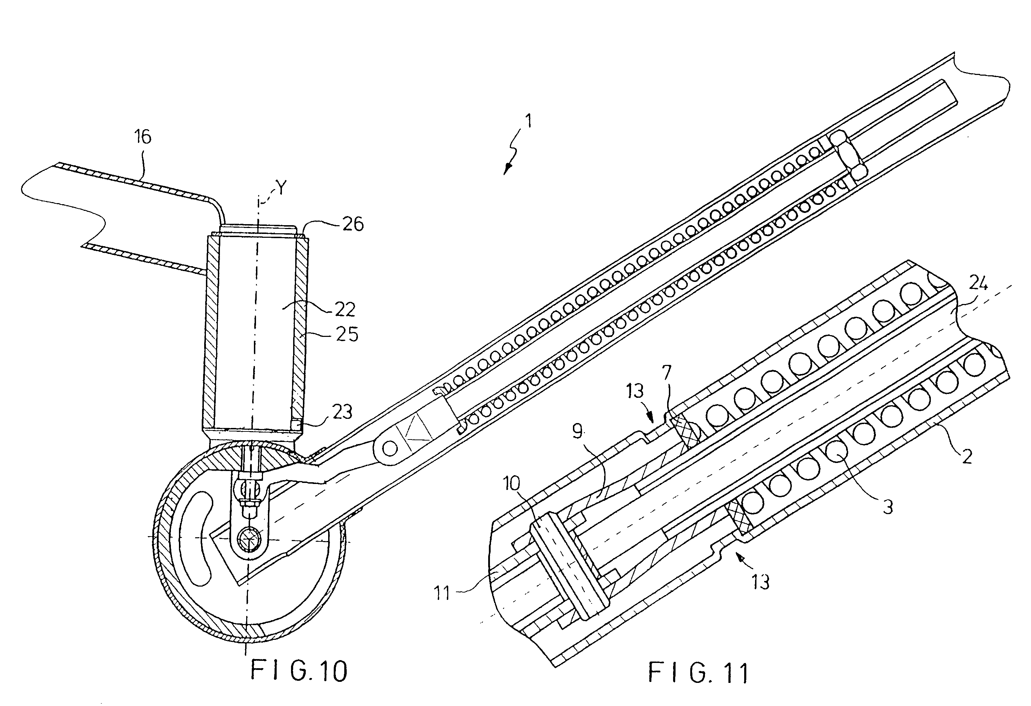

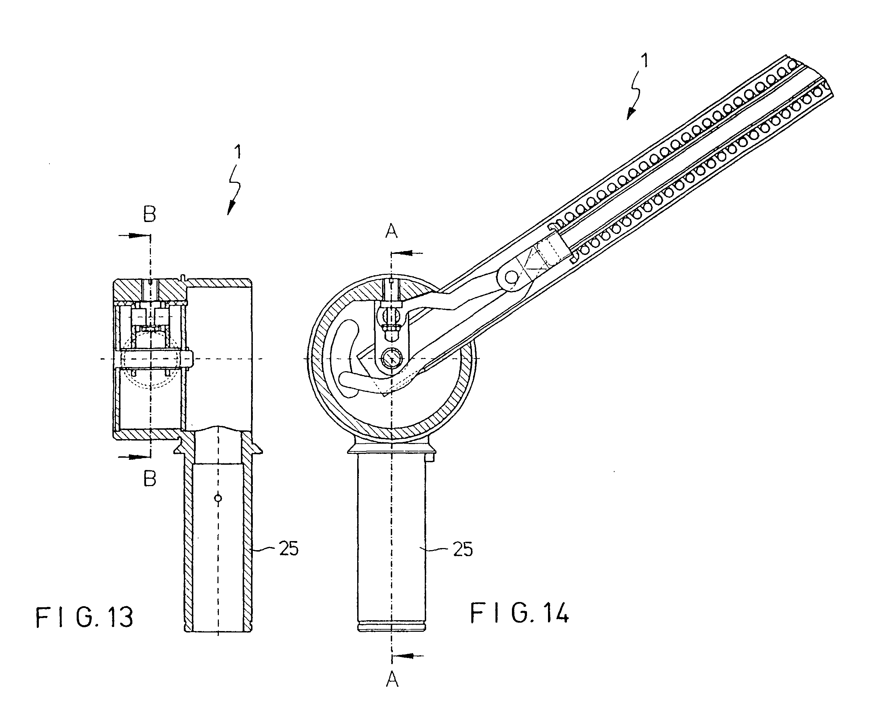

In der Figur 10 ist das Stativteilstück nach der Figur 8 mit einem Stativrohr 16 über eine Verbindungsbuchse 25 verbunden und mit einem Ring 26 gesichert, womit das Armrohr 2 um die Achse Y drehbar ausgebildet ist und eine hängende Verbindung bildet. Im Gegensatz dazu ist in den Figuren 13 und 14 die Verbindungsbuchse 25 nach unten angeordnet für eine aufsitzende Verbindung.

Der Schnitt C-C nach der Figur 8 ist in der Figur 11 dargestellt, woraus weitere Einzelheiten über die Figur 6 hinaus hervorgehen.

Ein komplettes Stativ 1 ist in der Figur 12 dargestellt, welches als ein fahrbares Bodenstativ mittels eines entsprechenden Fußes 26 mit Rädern 27 ausgebildet ist und mit einer Leuchte 4.1 versehen ist, die über ein Stromversorgungskabel 24 (Figur 8) über einen Transformator 28 verbunden ist. Zur Ortsverstellung ist das Stativ 1 mit einem Handgriff 29 versehen.

Der in den Figuren 8,10,11 und 14 dargestellte Arm 2 zeigt den Sonderfall der oberen Ruheposition des Armes 2. Wird der Arm 2 nach unten bewegt, so bewegt sich die Spindel 6 einschließlich der Verlängerung (Gabel) 9 zwecks Komprimierung der Druckfeder 3 relativ zum Arm, wodurch sich die Federkraft des ersten Federanschlags 7 auf die Einbuchtung 13 erhöht und so einen Gewichtsausgleich einer Traglast 4,4.1 je nach Armposition bewirkt.

### Bezugsziffernliste

- 1: Stativ (Figur 12)
- 2: Armrohr
- 3: Druckfeder
- 4: Traglast (Figur 12)
- 4.1: Leuchte
- 5: Armgelenk
- 6: Spindel
- 7: Erster Federanschlag
- 8: Zweiter Federanschlag
- 9: Axiale Verlängerung
- 10: Erstes Gelenk
- 11: Hebel
- 12: Zweites Gelenk
- 13: Einbuchtung
- 14: Erste Seite
- 15: Zweite Seite
- 16: Stativrohr
- 17: Gewindemutter
- 18: Baueinheit
- 19: Gelenkaufnahme
- 20: Stellschraube
- 21: Gelenkgehäuse
- 22: Zapfenverbindungselement
- 23: Drehanschlag
- 24: Stromversorgungskabel
- 25: Verbindungsbuchse
- 26: Fuß
- 27: Rad
- 28: Transformator
- 29: Handgriff
- X: Abstand der Einbuchtungen

## Patentansprüche

1. Stativ (1) mit einer in einem Armrohr (2) angeordneten Druckfeder (3) zum Halten einer Traglast (4) in einer manuell vorgegebenen Höhenposition mittels eines Armgelenks (5),
- wobei die Druckfeder (3) von einer Spindel (6) mit einer vorgegebenen Vorspannung einerseits mittels eines ersten Federanschlags (7) und andererseits mittels eines zweiten Federanschlags (8) kraftschlüssig aufgenommen ist,
- wobei die Spindel (6) im Bereich des ersten Federanschlags (7) eine axiale Verlängerung (9) aufweist, die über ein erstes Gelenk (10) mit einem Hebel (11) verbunden ist, der endseitig mit einem zweiten Gelenk (12) verbunden ist,
- wobei das Armrohr (2) mit dem Armgelenk (5) verbunden ist,
- wobei der erste Federanschlag (7) kraftschlüssig auf der axialen Verlängerung (9) aufliegt,
- wobei das Armrohr (2) mit zwei gegenüberliegenden Einbuchtungen (13)versehen ist, die zueinander einen Abstand (X) aufweisen,
**dadurch gekennzeichnet,**
**daß** der erste Federanschlag (7) scheibenartig vorgesehen ist und daß zwei gegenüberliegende erste Seiten (14) einen kleineren Abstand als der Abstand (X) der Einbuchtungen aufweisen und daß zwei um 90 Grad verdrehte zweite Seiten (15) einen größeren Abstand als der Abstand (X) der Einbuchtungen aufweisen, wobei die zweite Seiten (15) mit den Einbuchtungen (13) nach Art einer Bajonettverriegelung miteinander kommunizieren.

2. Stativ nach Anspruch 1, **dadurch gekennzeichnet, daß** das Armrohr (2) einen rechteckigen Querschnitt aufweist.

3. Stativ nach Anspruch 1, **dadurch gekennzeichnet, daß** das Armrohr (2) einen kreisförmigen Querschnitt aufweist.

4. Stativ nach mindestens Anspruch 1, **dadurch gekennzeichnet, daß** die Einbuchtungen (13) durch einen Einprägeprozeß ausgestaltet sind.

5. Stativ nach mindestens Anspruch 1, **dadurch gekennzeichnet, daß** die Spindel (6) der erste und zweite Federanschlag (7, 8), die Druckfeder (3), die axiale Verlängerung (9), das erste Gelenk (10) und der Hebel (11) mit einem zweiten Gelenk (12) als eine Baueinheit (18) ausgebildet ist.

## Claims

1. Stand (1) with a compression spring (3) arranged in a tubular arm (2) for holding a load (4) in a manually defined vertical position by means of an arm articulation (5), the compression spring (3) being received non-positively by a spindle (6) with a defined prestress on the one hand by means of a first spring stop (7) and on the other hand by means of a second spring stop (8), the spindle (6) having, in the region of the first spring stop (7), an axial extension (9) which is connected via a first articulation (10) to a lever (11) which is connected at its end to a second articulation (12), the tubular arm (2) being connected to the arm articulation (5), the first spring stop (7) resting non-positively on the axial extension (9), the tubular arm (2) being provided with two opposite indentations (13) which have a spacing (X) from one another, **characterized in that** the first spring stop (7) is of disc-like design, and **in that** two opposite first sides (14) have a spacing smaller than the spacing (X) of the indentations, and **in that** two second sides (15) rotated by 90° have a spacing greater than the spacing (X) of the indentations, the second sides (15) interacting with the indentations (13) in the manner of a bayonet lock.

2. Stand according to Claim 1, **characterized in that** the tubular arm (2) has a rectangular cross section.

3. Stand according to Claim 1, **characterized in that** the tubular arm (2) has a circular cross section.

4. Stand according to at least Claim 1, **characterized in that** the indentations (13) are formed by an impression process.

5. Stand according to at least Claim 1, **characterized in that** the spindle (6), the first and second spring stops (7, 8), the compression spring (3), the axial extension (9), the first articulation (10) and the lever (11) with a second articulation (12) are designed as a subassembly (18).

## Revendications

1. Support (1) comprenant un ressort de compression (3) disposé dans un bras tubulaire (2) pour maintenir une charge porteuse (4) dans une position en hauteur prédéfinie manuellement au moyen d'un bras d'articulation (5),
- le ressort de compression (3) étant reçu par engagement par adhérence par une broche (6) avec une précontrainte prédéfinie d'une part au moyen d'une première butée de ressort (7) et d'autre part au moyen d'une deuxième butée de ressort (8),
- la broche (6) présentant, dans la région de la première butée de ressort (7) un prolongement axial (9) qui est connecté par le biais d'une première articulation (10) à un levier (11) qui est connecté du côté de l'extrémité à une deuxième articulation (12),
- le bras tubulaire (2) étant connecté au bras d'articulation (5),
- la première butée de ressort (7) s'appliquant par engagement par adhérence contre le prolongement axial (9),
- le bras tubulaire (2) étant pourvu de deux dentelures (13) opposées qui présentent un espacement (X) l'une de l'autre,
**caractérisé en ce que**
- la première butée de ressort (7) est prévue avec une forme de disque et **en ce que** deux premiers côtés opposés (14) présentent un espacement plus petit que l'espacement (X) des dentelures et **en ce que** deux deuxièmes côtés (15) tournés de 90 degrés présentent un espacement plus important que l'espacement (X) des dentelures, les deuxièmes côtés (15) communiquant avec les dentelures (13) à la façon d'un emboîtement à baïonnette.

2. Support selon la revendication 1, **caractérisé en ce que** le bras tubulaire (2) présente une section transversale de forme rectangulaire.

3. Support selon la revendication 1, **caractérisé en ce que** le bras tubulaire (2) présente une section transversale de forme circulaire.

4. Support selon au moins la revendication 1, **caractérisé en ce que** les dentelures (13) sont réalisées par un processus d'impression.

5. Support selon au moins la revendication 1, **caractérisé en ce que** la broche (6) de la première et de la deuxième butée de ressort (7, 8), le ressort de compression (3), le prolongement axial (9), la première articulation (10) et le levier (11) avec une deuxième articulation (12) sont réalisés en tant qu'une seule unité de construction (18).
